# EUROPEAN PATENT APPLICATION

(11) **EP 3 809 295 A1**
(43) Date of publication of application: **21.04.2021**
(21) Application number: 20202091.3
(22) Date of filing: 15.10.2020
(51) Int. Cl.: G06F 21/34, G06F 21/62, G06F 21/32

(54) **RIGHTS MANAGEMENT USING DIGITAL FINGERPRINTS**

(30) Priority: 15.10.2019 US 201916653943
(71) Applicant: Alitheon, Inc., Bellevue, WA 98004 (US)
(72) Inventor: Ross, David Justin, Bellevue, Washington 98004 (US); Withrow, Justin Lynn, Bellevue, Washington 98004 (US)
(74) Representative: Dendorfer, Claus

(57) **Abstract**

A system comprises a combination of digital fingerprint authentication techniques, processes, programs, and hardware that facilitate the assignment, management, and enforcement of rights related to the usage of a physical object and associated digital objects or a digital object itself. An unspoofable, secure linkage is created between a physical key object through its digital fingerprint to one or more digital, physical, or hybrid objects (protected assets), where there need be no other relationship between the key object and the protected assets than the key object digital fingerprint. The digital fingerprint must be unambiguously derived from the key object. It should remain matchable with high confidence even as the key object ages or wears. A rights server or platform qualifies access to a protected asset based on the linked digital fingerprint and manages distribution and usage of the asset according to policies and rights stored in or associated to the digital fingerprint.

## Description

### RELATED CASE

None, this is an original application.

### COPYRIGHT NOTICE

COPYRIGHT © 2019 Alitheon, Inc. A portion of the disclosure of this document contains material which is subject to copyright protection. The copyright owner has no objection to the facsimile reproduction by anyone of the document or the disclosure, as it appears in the Patent and Trademark Office file or records, but otherwise reserves all copyright rights whatsoever. 37 C.F.R. § 1.71(d) (2017).

### TECHNICAL FIELD

This application pertains to methods, systems and software for utilizing a digitally fingerprinted physical object (a "key object") to securely control access to, and or permitted usage of, an asset which may comprise a physical object, a digital file or program, or a hybrid object.

### BACKGROUND

Digital Rights Management (DRM) is a legacy approach to copyright protection of digital media works such as music and video files. While DRM is useful in some cases to prevent theft or limit copying through the use of embedded code, it is a limited and unreliable approach. The need remains for more secure, flexible, and widely applicable methods for protecting access to, and controlling the uses of, a variety of assets-including digital, physical, and digital/physical hybrid assets ("hybrid assets"). A need also remains to provide for a secure and reliable authentication of a user without collecting and storing conventional biometric data or other personally identifiable information (PII).

### SUMMARY OF THE PRESENT DISCLOSURE

The following is a summary of the present disclosure to provide a basic understanding of some features and context. This summary is not intended to identify key or critical elements of the disclosure or to delineate the scope of the disclosure. Its sole purpose is to present some concepts of the present disclosure in simplified form as a prelude to a more detailed description that is presented later.

A system taught by this disclosure generally comprises a combination of digital fingerprint authentication techniques, processes, programs, and hardware that facilitate the assignment, management, and enforcement of rights related to the usage of a physical object and associated digital objects, data, and other digital constructs. Among the novel features of this disclosure is an unspoofable linkage between one or more physical objects (a "key object") through their digital fingerprints to one or more digital, physical, or hybrid objects (also referred to as "assets") where there need be no other relationship between the key object and the assets other than a link created through one or more digital fingerprints. The key object may be any physical object capable of being digitally fingerprinted as described herein. Preferably, the key object should be movable, but it does not have to be. A key object may be an inanimate object or a living object such as, for example, a person. In the case of a person, digital fingerprints may be prints of the face, hands, etc. of the person.

The digital objects connected to the digital fingerprint may be any digital item, including but not restricted to an instruction manual, a program, a file, an electronic key, an access pass, a password, a database record, or a database. The protected digital object (asset) may even be a collection of digital fingerprints. In another example, the digital object is the rights management server or platform described herein. In that example, the key object digital fingerprint may be required to access the rights management platform itself. In this disclosure, the object digitally fingerprinted (key object) will always be a physical object, while the object (protected asset) accessed, controlled, monitored, or otherwise associated with the key object via the key object's digital fingerprint may be digital, physical, or a digital/physical hybrid (including any kind of combination).

This disclosure teaches, *inter alia,* methods of using digital fingerprints of physical objects to govern object distribution including, but not limited to, object-locking and unlocking mechanisms, metering, payment processing, record-keeping, and/or anything related to the relationship between physical objects and associated data, digital objects, programs, digital content, or hybrid (digital/physical) objects. The taught approaches control physical and digital object access, such as permissions, the number of uses or lengths of use, as well as governing rights associated with altering, sharing, and copying of the individual, digitally fingerprinted physical object or any object (physical and/or digital) associated with that digital fingerprint or fingerprints.

This disclosure refers to "connecting" or "linking" a digital fingerprint to a protected asset. This may be done, for example, by adding the key object digital fingerprint to a digital fingerprint record, or other database record, of the protected asset or to a record associated with the protected asset. In one example, the digital fingerprint record may be stored in a blockchain technology decentralized electronic ledger. Thus, the key object digital fingerprint may be used to query a data store and find a record corresponding to the protected asset. That record may also include a wide variety of policies, rules, usage parameters, usage data, workflows, and other information such as those mentioned above pertaining to the protected asset.

In a preferred embodiment, a suitable data store contains asset records of each protected asset. An owner or proprietor of the asset may establish specific rules, policies, limits, data collection flows, billing, and/or myriad other possible features and processes and store them in the asset record. A rights server or platform is operatively coupled to the data store and contains interfaces, hardware, and software components arranged to carry out and enforce the parameters stored in the corresponding record for each protected asset.

This Brief Summary has been provided to describe certain concepts in a simplified form that are further described in more detail in the Detailed Description. The Brief Summary does not limit the scope of the claimed subject matter, but rather the words of the claims themselves determine the scope of the claimed subject matter.

### BRIEF DESCRIPTION OF THE DRAWINGS

To enable the reader to realize one or more of the above-recited and other advantages and features of the present disclosure, a more particular description follows by reference to specific embodiments thereof which are illustrated in the appended drawings. Understanding that these drawings depict only typical embodiments of the disclosure and are not therefore to be considered limiting of its scope, the present disclosure will be described and explained with additional specificity and detail through the use of the accompanying drawings in which:
FIG. 1 is a simplified block diagram of one example of a secure digital fingerprint-based rights management system consistent with the present disclosure.
FIG. 2 is a simplified system block diagram to illustrate examples of rights server communications with various internal and external equipment and processes.
FIG. 3 is a simplified flow diagram of an example process to implement a secure digital fingerprint-based rights server.
FIG. 4 is a simplified flow diagram of a process for leveraging objects instead of biometric identification to avoid collecting personally identifiable information of a person.
FIG. 5 is a simplified diagram conceptually illustrating examples of database records that may be used in connection with some of the systems and methods disclosed herein.
FIG. 6 is a simplified flow diagram of a process to enforce management usage parameters governing a protected asset.

### DETAILED DESCRIPTION OF PREFERRED EMBODIMENTS

Reference will now be made in detail to embodiments of the inventive concept, examples of which are illustrated in the accompanying drawings. The accompanying drawings are not necessarily drawn to scale. In the following detailed description, numerous specific details are set forth to enable a thorough understanding of the inventive concept. It should be understood, however, that persons having ordinary skill in the art may practice the inventive concept without these specific details. In other instances, well-known methods, procedures, components, circuits, and networks have not been described in detail so as not to unnecessarily obscure aspects of the embodiments.

It will be understood that, although the terms first, second, etc. may be used herein to describe various elements, these elements should not be limited by these terms. These terms are only used to distinguish one element from another. For example, a first machine could be termed a second machine, and, similarly, a second machine could be termed a first machine, without departing from the scope of the inventive concept.

It will be further understood that when an element or layer is referred to as being "on," "coupled to," or "connected to" another element or layer, it can be directly on, directly coupled to or directly connected to the other element or layer, or intervening elements or layers may be present. In contrast, when an element is referred to as being "directly on," "directly coupled to," or "directly connected to" another element or layer, there are no intervening elements or layers present. Like numbers refer to like elements throughout. As used herein, the term "and/or" includes any and all combinations of one or more of the associated listed items.

The terminology used in the description of the inventive concept herein is for the purposes of describing illustrative embodiments only and is not intended to be limiting of the inventive concept. As used in the description of the inventive concept and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed objects. It will be further understood that the terms "comprises" and/or "comprising," when used in this specification, specify the presence of stated features, integers, steps,
operations, elements, and/or components, but do not preclude the presence or addition of one or more other features, integers, steps, operations, elements, components, and/or groups thereof.

**Nomenclature.** Some of the terms used herein have the following meanings or illustrative species. Digital fingerprinting and scanning are described in more detail later.
- Originator - individual or organization who has, is presumed to have, or is shown to have, initial ownership, possession, or control of the physical object and/or is first to cause an object to be inducted into the taught system
- User - a person or entity who uses or operates components of this disclosure
- Permissions - modify, copy, annotate, sell, lend, give, lease, destroy, etc.
- Scanner - a device that can sense and capture either electromagnetic radiation or a mechanical wave that has traveled through a physical object or reflected off a physical object or any other means to capture surface or internal structure of an object. Common examples may include a camera, CCD array, x-ray machine, etc. See definition for "scanning" herein for further details.
- Access - this is to be understood to have as broad a meaning as possible. When the digital fingerprint of a key object is submitted to the system, as discussed in detail below, the permitted capabilities of the digital object may become available to the submitter of the digital fingerprint (subject to other security measures such as other fingerprints, passwords, and the like). The great breadth of the concept of access will become clearer in the discussions of embodiments.

A system, in one embodiment, may comprise a combination of digital fingerprint authentication techniques, processes, programs, and hardware that facilitate the assignment, management, and enforcement of rights related to the usage of a physical object and associated digital objects, hybrid objects, data, and other digital constructs. Spoofing, an increasingly common problem, is the act of disguising a communication from an unknown source as being from a known, trusted source. Spoofing may occur in relation to emails, phone calls, and websites, or can be more technical, such as computer spoofing of an IP address, Address Resolution Protocol (ARP), or Domain Name System (DNS) server. Among the novel features of this disclosure is the unspoofable linkage between one or more physical objects through their digital fingerprint or fingerprints to one or more digital, physical, or hybrid objects where there need be no other relationship between the objects than through the digital fingerprint or fingerprints.

The digital objects connected to the digital fingerprint may be any digital item, including but not restricted to an instruction manual, a program, a file, or database. One example digital object is the rights management server or platform described herein. In this disclosure, the object digitally fingerprinted will always be physical, while the object accessed, controlled, monitored, or otherwise associated may be digital or physical or a hybrid, such as a book or a game that comprises both physical and digital components.

Digital rights management (DRM) was designed to facilitate controlled distribution of digital content and combat breaches of copyright law. This disclosure teaches methods of using the digital fingerprints of physical objects to govern object distribution including, but not limited to, object-locking and unlocking mechanisms, metering, payment processing, record-keeping, and anything related to the relationship between physical objects and associated data, digital objects, programs, or digital content. The taught approaches may control physical and/or digital object access, such as permissions, the number of uses and/or lengths of use, as well as governing rights associated with altering, sharing, and copying of the individual digitally fingerprinted physical object or any object (physical or digital or hybrid) associated with that digital fingerprint.

### Connections Between the Digital and Physical Worlds

Many of the concepts concerning connections between the digital and physical words (but not how to securely connect them) can be found in https://www.wired.com/story/mirrorworld-ar-next-big-tech-platform/. The article discusses in detail a concept that has been gaining attention, namely, the "mirror world", i.e. the universe of "digital twins" of physical objects. In short, the "mirror world" may be viewed as a digital elaboration of the physical world.

Although an excellent introduction to important concepts, the article (and the term "mirror world") gives a limiting description of the objects in the digital world as being "digital twins", copies, or elaborations of particular physical objects. Contrastingly, the concepts and embodiments described herein broaden the range of possible relationships between the two worlds far beyond the concept of a "digital twin". The present disclosure teaches, *inter alia,* methods of creating secure linkages between any physical object and any digital object through unspoofable digital fingerprints of the physical object. Once those links are established, the disclosures elaborate on different applications of the approach to accomplish various tasks and/or achieve a broad variety of outcomes.

What is currently missing in the evolving concept of "digital twins," and what is supplied by the digital fingerprinting technology described below, are secure links between objects in the physical world and objects in the digital world. The digital fingerprinting process provides unspoofable links between the two worlds. By using digital fingerprints not only are the links between the objects in the digital and physical worlds secure but links are not limited to "digital twins" but may be securely made between any number of digital and physical objects through a variety of structures and relationships, regardless of whether the objects are "digital twins" or not. In the present context, beyond the digital fingerprint of the physical key object granting some form of access to or control of the digital (or hybrid) object, the physical and digital objects need not have had any relationship with each other prior to the association created through the digital fingerprint.

Where this disclosure uses examples of a single physical key object and a single digital object, with the physical key object's digital fingerprint giving access to the digital object, it should be understood that multiple physical key objects may give access or control to the same digital object (either individually or in some combination, sequence, order, proportion, etc.) and that multiple digital objects may be accessible or controllable by a single physical one. These features and variables, among other aspects, may be automatically managed by a rights server, described below, in accordance with specifications provided in the corresponding object records stored in a datastore accessible to the rights server. The sole requirement for the teachings described here is that one or more physical objects provide access to one or more digital objects through the association captured in the database of the individual digital fingerprints of the physical objects.

Although often the digital object may be a record containing information about the physical key object whose digital fingerprint is used to access it, there is no requirement that this be the case. Indeed, there are very few restrictions on the objects involved, whether they are physical, digital, or hybrid objects. An important restriction is that it must be possible to repeatably digitally fingerprint a physical key object well enough that the digital fingerprints reliably match in a manner that cannot be practicably spoofed. It is through this unspoofability and repeatability that the secure physical-digital linkage is made possible. Digital fingerprinting methods, such as Alitheon's own patented methods, that reliably and unspoofably authenticate individual physical objects are useful for the purposes of these disclosures, while other digital fingerprinting methods (especially those that capture non-unique features or features shared among similar objects) will not be appropriate. Additionally, access to the digital or hybrid object must be granted, modified, mediated, or influenced by the digital fingerprint. Note that the access or control (either may be implied by the use of the word "access") granted by a digital fingerprint can be full, partial, or structured in myriad ways.

It should now be clear why the concept of "digital twin" is inadequate for understanding the relationship of a physical object to a digital in the context of the teachings of this disclosure. "Digital twin" implies that the digital object resembles in some way the physical one, i.e. it looks like it, contains data about it, or has some other appreciable relation to it. In many of the embodiments described below the digital object is indeed a file containing information on or relating to the physical object or objects and how the physical objects can or may be used. However, it should be kept in mind that this is not a requirement or a consequence of the described approaches. All that is required in preferred embodiments is that the digital fingerprint of a physical object possess the basic properties outlined and be used in a system to grant access to a digital object.

**The physical key object.** The "key object" is so called because it provides, through its digital fingerprint, a way to "unlock" or access the protected physical, digital, or hybrid object. It is in the extraction and use of the key object's digital fingerprint that the line between the physical and digital worlds is crossed.

Any physical object that can be digitally fingerprinted reliably and repeatably, and thus used as a "key object" is in view for this purpose. The physical object must have a material surface or internal structure that is consistent enough from one digital fingerprinting to the next to be reasonably certain beyond a threshold level that digital fingerprints of the physical object will reliably and unambiguously match. It is not, however, necessary that the surface or internal structure of the physical object be unaltering. In one example, a person may serve as the key object. That is, a digital fingerprint of the person's face, hand, or other physical characteristics may be used to control access to an asset (digital, physical, or hybrid) using the disclosed systems.

If the physical object changes only modestly between the times when the digital fingerprints are acquired and if the new digital fingerprints are added to the digital fingerprint record, then such an object is appropriate for the linking discussed here even in the presence of substantial progressive change. See "Preserving Authentication under Item Change," U.S. Patent Application Pub. 2017-0243230 A1, incorporated herein by reference. The remainder of this discussion assumes the physical object may be reliably digitally fingerprinted to fulfill the teachings of this disclosure.

**The digital object.** The asset linked to the key object, as noted, may be a physical object, a digital object, or a hybrid of the two. The managed digital object may be a file containing information, a computer program for performing some function, or anything else that is at least partially digital. The only restriction on the digital object (or the digital portion in case of a hybrid or composite object, such as when a physical component has a digital component which contains material relating to the access, use, rent, control, etc. of a physical component) is that it be accessible, either directly or indirectly through a key provided in this case by the digital fingerprint of the physical object (the "key object"). In many of the embodiments discussed in the various disclosures and as examples in this description, the digital object contains information about a corresponding physical object, its history, permissions on its use, and files related to all of this. But none of these is necessary. The concept of "access" is defined broadly, and some examples of "access" are given below. The processes described herein assume that effective digital fingerprinting can only be done by having possession of the physical key object (and not, for example, merely an image or reproduction of the key object) and that appropriate (and well-understood in the field) measures are taken to ensure this is true.

In one embodiment of the present disclosure, a digital fingerprint-based rights management system may operate in the following fashion. An originating entity has an object (physical or digital or a combination of both) that it desires to meter, track, authenticate, or control access to, based, for example, on a schedule or payment plan. The originating entity scans a physical key object to create a digital fingerprint of the physical key object and enters the digital fingerprint into the taught system. The digital fingerprint of a physical key object serves as a unique identifying key that is stored in the taught system. The digital fingerprint may be optionally combined with other credentials or functions to grant access (or a degree of access) to a rights management server. The rights management server provides to authorized entities the ability to define or initiate specific rights, policies, procedures, etc. in association with digital fingerprints in the taught system. These may be called management parameters. This approach allows an object originator or owner a reliable way to implement copyright protection, detection or prevention of tampering, service authorization, allocation of rights, payment authorization, and/or a variety of other management parameters not limited to the above.

Subsequently, when an authorized customer wants to use an object that is associated with a digital fingerprint stored in the rights management server, the system uses a digital fingerprint to confirm the identity of the associated key object with high confidence. The customer may tender a digital fingerprint ostensibly of the key object associated with the object that the customer wishes to use. Alternatively, the customer may present a purported key object into view of a digital fingerprint scanner coupled to the rights management system. The digital fingerprint scanner either contains or connects to software that provides object authentication and the potential for the operating entity to use the presented object's digital fingerprint and optional user credentials to access associated digital assets such as the rights management server.

In an embodiment, as well as delineating and controlling positive uses of the system, this method may also be used to ensure that the usage or data may not be directed to prohibited uses, or to provide an incentive/disincentive with respect to prohibited or undesirable use, as defined by the object originator or his agent. The rights management server may manage both the operations that a customer or user is permitted to perform or is prohibited from performing in relation to the physical object. All of these functions and more may be specified in management parameters stored in or linked to the corresponding object record.

In an embodiment, a rights management server may also orchestrate the fulfillment and coordination of actions associated with digital fingerprints according to associated policies and procedures, such as working with security mechanisms or systems that permit access to physical objects. If the rights management server permits access, it may grant access through connected security or governing systems, such as a locking mechanism, which may be digital, physical, or both. These security mechanisms or systems may be incorporated in the physical object itself, affixed to the object, or contain the object, such as a lock box. Some of these actions may be realized by the rights server executing a predetermined workflow for that purpose.

In an embodiment, a system may also provide data or other evidence from sensors, such as temperature readers, x-ray imaging, etc. that provides statistical confidence for the originating entity or third parties that the system or object is or was being used according to specification. Devices and other computerized systems connected to the taught system may use a digital fingerprint (alone or in conjunction with other digital fingerprints and/or identifying data concerning or relating to the object or authorized entities accessing the system) to convey and control licensing and usage rights for physical and digital objects as between the owner or originating entity and the user of the physical object. Connected devices and other computerized systems may involve all aspects of physical object distribution, ranging from object-locking mechanisms, metering, to payment processing, record-keeping, and more. It may involve all aspects of digital object distribution, including ability to access a file, run a program, update information, etc.

In addition to or separate from the original physical object that was digitally fingerprinted, the rights management server may be accessed by other designated digital fingerprints. If designated by an authorized entity, intermediary digital fingerprints may be used to access the rights management server for control of other physical objects or associated digital objects or hybrid objects. Permissions, modes of access, and other such conditions may vary for different digitally fingerprinted objects and their associated digital objects and/or records and may be staggered, layered, or otherwise structured by any known method. These parameters preferably are stored in conjunction with the corresponding digital fingerprint.

The scanning of the key object to identify the digital fingerprint and interacting via a rights management server enables customers to agree to terms for metered use for specific physical, digital, or hybrid assets and makes the use contractual and legitimate. To prevent use of a stolen object, additional objects may be created whose digital fingerprints may control access, or levels of access, to the original object.

One application of this disclosure involves distribution channels for physical goods. First, a digital fingerprint, being one-of-a-kind and unique to the physical object and appreciably different from the digital fingerprints of all other physical objects, is used to create a specific object-level connection and/or interaction between the originator and an authorized customer by linking the customer to the physical object's digital fingerprint, which digital fingerprint was previously created by, procured by, or otherwise connected to the known originator in the taught system. In one example, an identifier of the customer may be stored in a record associated with the managed asset (physical object) along with the object's digital fingerprint.

In this disclosure the examples given frequently involve controlling object usage in a lender-customer relationship, but the system described is intended to cover any and all situations in which possession, ownership, use, and/or any other interest in a physical, digital, or hybrid object is transacted , presented or proposed between two or more entities. Throughout, where "object" is used in the sense of an object protected or managed by a rights server system through a key object, that object should be understood in the broadest possible meaning. Such an object may be purely physical (such as a painting or a piece of equipment), purely digital (such as a computer program or a song), or hybrid (such as a software-controlled access door, or a physical object along with an associated digital file containing, for example, its management parameters). Transactions envisioned in this disclosure include, without limitation, scenarios where rights to use a certain physical, digital, or hybrid object are governed and managed by the disclosed system.

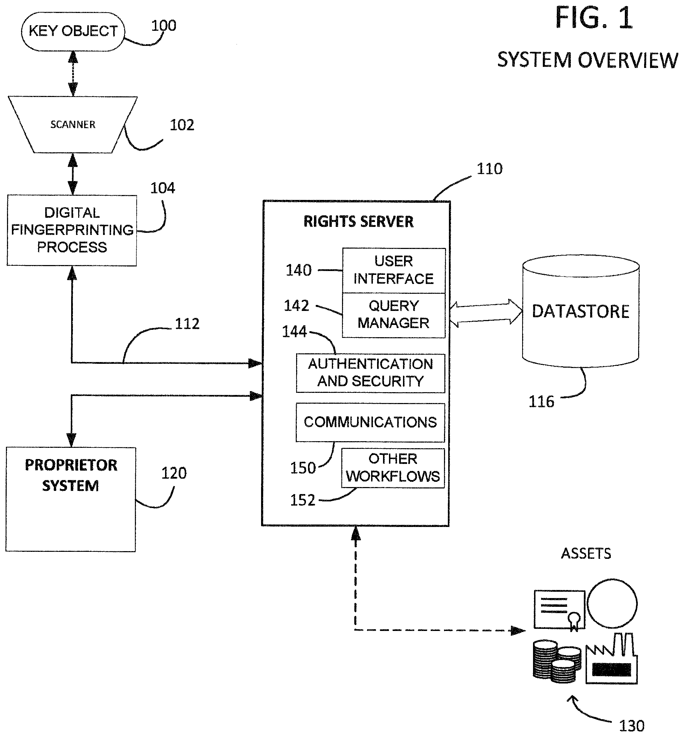

Figure 1 is a simplified block diagram of one example of a system consistent with the present disclosure. A physical key object 100 may be presented to a scanner 102 to acquire image data. The image data is processed by a process 104 to extract one or more digital fingerprint(s) of the object 100. Digital fingerprinting is described in more detail below. These elements may be discrete or integrated. For example, the scanner may be a camera in a smartphone, and the digital fingerprinting process may be an app on the same smartphone. Alternatively, intermediate data (for example, digital image data) may be transmitted over a network to a remote processor to generate one or more digital fingerprints from the image data.

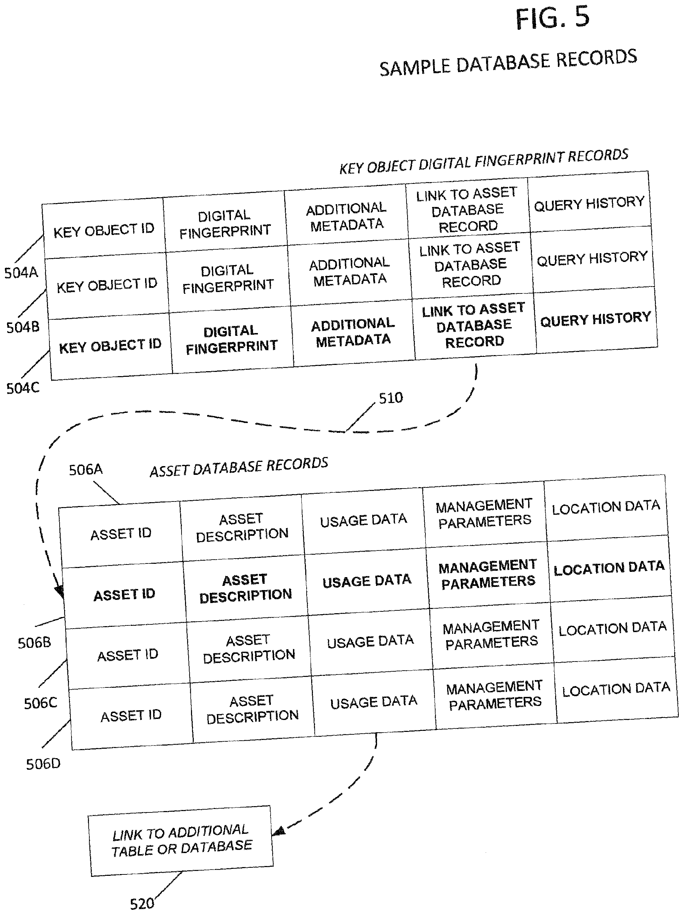

The digital fingerprint of the key object is securely communicated to a rights server 110 via path 112 using known communications technology. The rights server 110 is coupled to (or includes) a datastore 116. The data store may contain various databases or tables, including, for example customer data and asset data. In some embodiments, assets to be managed or protected may each have a corresponding asset database record in a database in the datastore; one example is illustrated in Fig. 5 discussed below. The rights server may implement, for example, a user interface 140, query manager 142 for interaction with the datastore 116, an authentication process or application 144. One use of the authentication process may be to identify and or authenticate a key physical object 100 based on its digital fingerprint. In some cases, a digital fingerprint of a key object may be tendered directly to the rights server.

The rights server typically may also include communications components 150. Various communications components 150 may be included to communicate with various assets directly, as well as to communicate with sensors, meters, locks, and other elements to implement the functions of the rights server. The rights server may implement record keeping and various other workflows 152. Communication with assets 130 illustrates cases where the protected assets, physical, digital, or hybrid, have the ability to communicate directly with the server. Some digital assets, for example, data files, do not themselves communicate directly with the rights server. Rather, systems that utilize or access such assets may interact with the rights server. More details and additional examples of embodiments and use cases are given below.

### Lending Depot

In one use case, an entity such as a lending depot may utilize a digital fingerprint to uniquely identify its merchandise, such as food, alcohol, parts, apparel, handbags, watches or other luxury items, collectables, sporting equipment, instruments, heavy equipment, etc. Through the disclosed process, at least one unique digital fingerprint is created for each object that the depot chooses for the purposes of later authentication and re-identification. In an embodiment, a scanner 102 and process 104 may be used to generate these digital fingerprints of inventory objects and input them to a rights server for storage as part of a digital fingerprint record in a datastore.

Using this method, the depot has a digital fingerprint record for the physical characteristics of each object, which may include, in addition to the digital fingerprint, one or more features such as surface texture, x-ray images, shape, color, condition, dimensions, and weight. The digital fingerprint record may also include information about packaging, tags or other extrinsic identifiers, warranties, certificates, or other object-related information. The digital fingerprint is used as a unique key that grants an authorized customer access to usage rights associated with that specific physical object or set of objects and/or related data or digital objects, which access rights are maintained by the rights management server. The taught system grants access based on policy, procedure, or service contracts that have been associated with a digital fingerprint on the rights management server.

This approach provides the ability for originators in the depot to utilize this granular connection to provide differentiated service or governed-access business models through the individual object. In one such embodiment, this granular connection between users, such as customers, and individual objects may be used in object-as-a-service or object pay-per-use business models where an object is left in the depot or other public, private, or digital domains for unspecified use. In this example, any data about the customer, originator, the object, and the surrounding circumstances can be used to create a unique service contract between the originator and the customer. Because the taught method allows for the tracking of a particular object, the originator can offer individualized, specific service offerings such as subscriptions or single-use offerings.

A potential authorized user authenticates an object using a digital fingerprint, and then interacts with the taught system to take the steps necessary to access or create a metered license to use a particular object. The taught system uses the digital fingerprint to connect to the rights management server and, optionally, an incorporated security or governing mechanism aimed at ensuring that no entity may use that object unless there is a contract or license agreement in place that permits authorized access and usage rights. The taught system may prevent, or disincentivize, customers without a qualifying digital fingerprint, credentials, and appropriate license, as dictated from the rights management server, from using or attempting to use the object. One way such access control can be implemented is through communicating with incorporated security systems such as locking or alarm systems, detection systems, physical guards or law enforcement, or by assessing fines for improper, excessive, or unauthorized use. The taught system can make use of any related data such as log or sensor data. The control system may, for example, use an incorporated digital counter that logs how many times a protected device was started, how far it travelled during use, or the length of use.

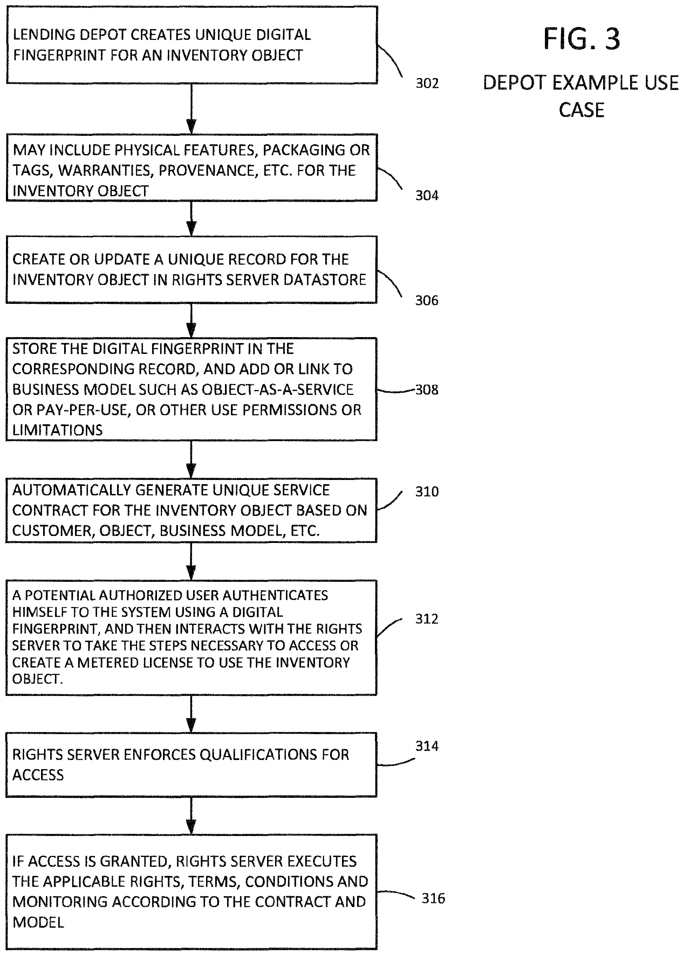

Figure 3 shows a simplified flow diagram of an illustrative workflow for one lending depot use case. Here, a lending depot may create a digital fingerprint for an inventory object, block 302. The digital fingerprint may include, in the case of a physical object, physical features, tags, other identifiers, packaging information, warranty information, provenance data, etc., represented at by block 304. Utilizing a user interface (for example, 140 in the system of Fig. 1), the proprietor causes the rights server to create or update a unique record for the inventory object, for example, in a datastore 116 of Fig. 1; see block 306. The digital fingerprint of the inventory object is stored in the corresponding record, block 308 and the proprietor causes the rights server to add to the record or link to selected business terms and conditions, for example, object-as-a-service or object pay-per-use business models where the object may be left in the depot or other public, private, or digital domains for unspecified use. At block 310, the rights server software may automatically generate a unique business contract for the specific inventory object and user, based on the specified terms and conditions. The contract may be digitally signed, or otherwise formed, using known methods.

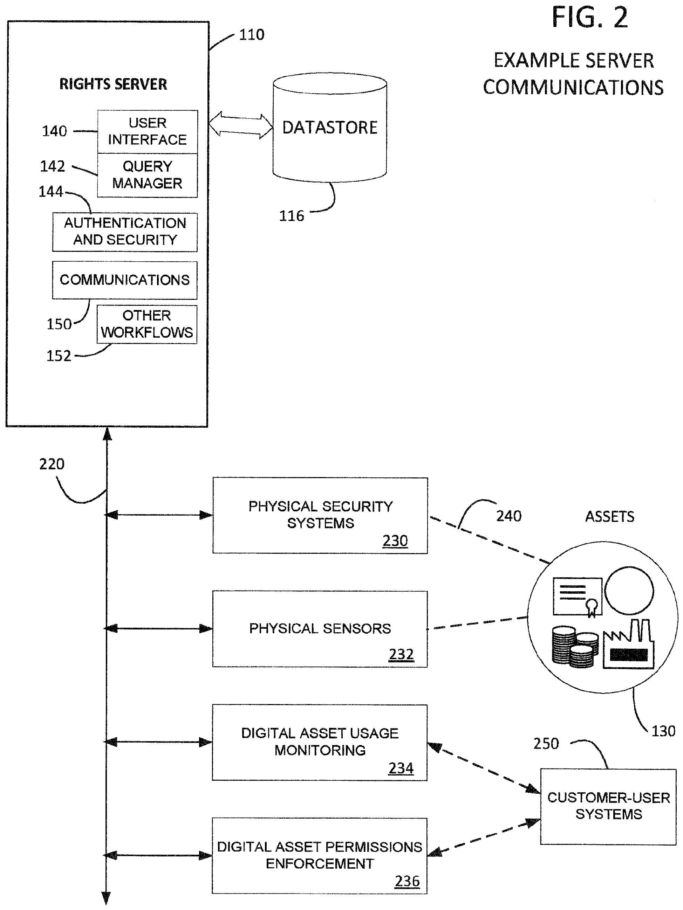

As noted above, a customer or potential user of the inventory object may be authenticated to the system, using a digital fingerprint, block 312. A biometric digital fingerprint of the user may be used. The server may enforce a variety of qualifications and security measures such as those mentioned above, block 314. If access is granted to the user, the rights management system executes and enforces the applicable rights, terms, and conditions to allow permitted usage of the inventory object, block 316. One example of systems and methods to do are illustrated in Fig. 2, described below.

The disclosed system benefits the depot lender by enabling the lender to specify terms of use with the customer for the specific inventory object through the digital fingerprint and its connection to the rights management system. The managed rights may, for example, comprise: usage of a specific object or set of objects (digital, physical, or hybrid); access to object history or other metadata; access to the ability to transport or move the object or objects; provide the means to limit the access to specified locations; and provide access to related data or digital artifacts.

The rights management server may facilitate transport of the inventory object by executing procedures and policies, working with associated security mechanisms or systems within the depot and/or the object. By scanning the inventory object and providing proper authentication and user credentials via the taught system, for example through an app, the customers identify themselves and can access or create a license to use the scanned object and any related digital objects, files, or artifacts. For example, the rights management server may turn off security tags or alerts associated with the inventory object, authorizing the removal of the object from the premises of, for example, a store. The taught system may work in conjunction with other authentication or management software. The taught system may be paired with user biometric data or multi-factor authentication for security and ease of use. For example, face recognition or biometric fingerprints may identify the customer and the rights server determine what rights, permissions, or licenses are available for that customer. Such rights can change from customer to customer.

The "depot" as discussed herein includes any potential physical space from which physical objects can be loaned. One example is where objects are intentionally left in spaces for object pick-up. Such spaces may be public, private, or shared. Users of the depot could be charged for incremental usage of objects in the depot by interacting with the taught system. For example, consider a scenario where heavy equipment or tools are stored and are available for use near a construction site. By using elements of the taught system, construction workers could use the equipment on a pay-per-use basis by supplying the object's digital fingerprint (captured, say, by a smart phone) and a biometric token (such as a user account or a digital fingerprint of their face) to the rights management service which controls the ability to use the piece of equipment.

In this embodiment, the taught system would inform security components connected to the system to release (allow) or deny the authenticated equipment to the customer. Optionally, mechanisms and sensors within the equipment would be informed of what usage allowances where permitted, such as length of continuous usage, hours of usage, location of usage, type of usage, and so on. Consider a scenario of allowing eight hours of total operation time, if sensors within the equipment read that the equipment is used more than eight hours, the sensor data can inform the rights management system to, for example, charge the customer additional fees according to the license agreement.

Figure 2 is a simplified block diagram of a system. It illustrates rights server 110 communications with some examples of internal and or external hardware and software elements to realize the server functionality. The examples shown are merely illustrative and not intended to be exhaustive. Communication with assets 130 illustrates cases where the protected assets, physical, digital, or hybrid, may have the ability to communicate directly with the server. For a digital asset such as a program, this may take the form of inter-process communications. The asset may be a "player" that controls use of a digital media content items (themselves also assets); it may interact with the server to enforce restrictions and or report usage of the media items.

The rights server may communicate with physical security systems, block 230, such as those mentioned above. The physical security systems 230 in turn are coupled to corresponding assets via link 240. The rights server may communicate with physical sensors, block 232. For example, sensors to monitor the environment around a loaned asset. The physical sensors 232 thus are couple to or arranged adjacent to assets 130. A sensitive item of laboratory equipment, for example, may require a limited temperature operating range to maintain calibration. Or, accelerometers may be utilized to ensure an asset is not "shaken" beyond limitations specified in the applicable use terms and conditions. These kinds of features may be useful where a physical asset is released to a user for the express purpose of transporting the asset to a new location, subject to limited vibration and temperature swings.

In one embodiment, the taught system is used for data and digital content distribution and discrimination. This method provides a convenient and secure way to distribute data and/or other digital content with such control exercised through the digital fingerprints of one or more physical key objects. This allows the lender to deliver information to a dynamically changing set of users in such a way that only authorized users can gain access. Further, the permissions and usage agreements can vary on a per-object or per-user basis. This embodiment may include access to copyrighted material, streaming audio/video, etc.

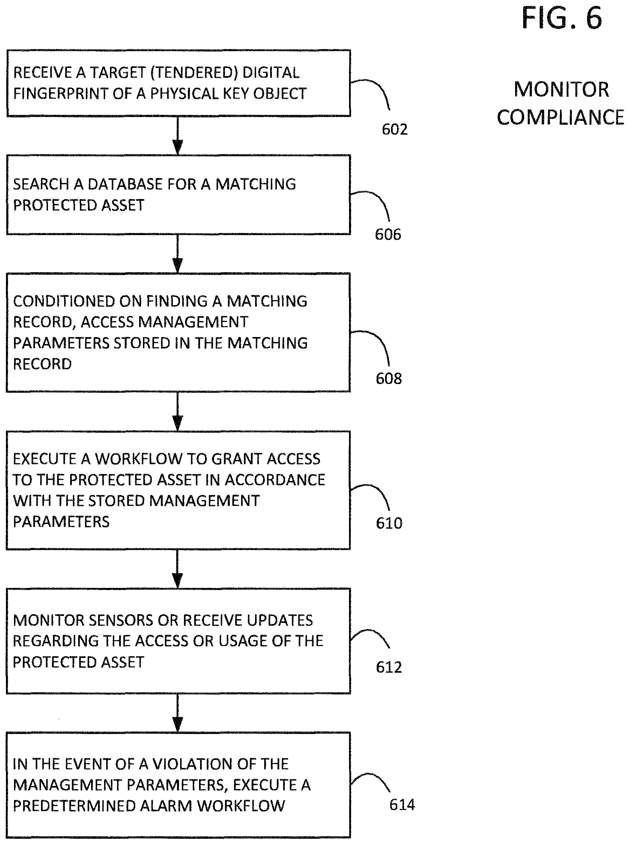

Referring again to Fig. 2, a rights server may communicate with digital asset usage monitoring systems or components 234. The monitoring system may communicate with a customer or user system 250 that is accessing or utilizing the protected digital asset. The rights server may communicate with components arranged to enforce digital asset permissions, block 236, for example by changing permissions to deauthorize or stop access to an asset after the permitted usage limit is reached. In an embodiment, an alarm process or workflow may be triggered when usage of an asset exceeds the applicable management parameters (see Fig. 6). Interaction with and control of hybrid assets, or associated data collection, may be realized using one or more of the components illustrated in Fig. 2.

In one embodiment, the disclosed control of a digital object through a physical object permits object owners or producers to bundle offerings, such as digital offerings that complement or in some manner relate to the use of the physical object. In one such embodiment, the object originator ties proprietary tutorials and instructions to a piece of equipment. A digital fingerprint is used to authenticate the physical object and access the rights management server that grants access to the tutorials and instructions.

In one embodiment, the taught system is used to create direct relationships among an object, a lender, and a borrower. The taught system uses a digital fingerprint to identify the object and provide access to the rights management server. The server contains details about the object's provenance, logs, and usage rights.

In one example, inventory objects in an object depot are entered into the taught system (for example, corresponding records stored in the datastore 116), along with at least one digital fingerprint which may be used to connect to the rights management server and identify the inventory object in the taught system. This unique connection, via the digital fingerprint, enables customers to access the rights management server to enter into agreements or contacts in order to legally obtain and take possession of desired specific objects in the depot.

The taught system benefits a lender by controlling object usage by using any adjoined data available. Such adjoined data may be related to a specific individualized object, to individualized customer data, geography, timestamps, temperature sensors, etc. The taught system may utilize data such as time, status, location, and condition of the objects. Any available data may be used to tailor offerings to a degree that has not been available before by controlling rights related to the use of that object. The rights management system may use computer programs to incorporate any data to calculate and select license terms for the object.

In an embodiment, an owner may use the taught system to enforce various schemes of apportionment of fees for object use. The system may implement, for example: an agreement to use the object within a defined geographic area, an agreement to use and return the object within a certain amount of time, an agreement to use the object for a certain amount of times, an agreement to certain use of digital artifacts related to that object, or any other suitable type of agreement. Each of these may have corresponding fees attached. Schemes of staggered fees for different embodiments of use may also be implemented. If the terms of the agreement are broken, the taught system may provide the ability to adjust rights or privileges for customers based upon the authentication of digital fingerprints of an object or related object. In this type of scenario, a system may implement two kinds of key objects - those that grant the user of the system the right to use the system or object in a certain way, and those that allow the proprietor to take away, add to, or otherwise alter those rights. These different roles may conveniently be managed by the rights management server. There may be one or many authentication checks to confirm the status of the object or related objects and to execute stored logic (a workflow, for example) in the taught system based upon the available rights of the customer.

The taught system may be so configured that it only needs the initial digital fingerprint to initiate the transaction and make the connection between originator and customer. After the connection is made, the rights management server or other software and/or hardware may be used to enforce, monitor, modify, or otherwise manage usage rights. Consider an example where an asset is in an individual's possession but the individual stops making the appropriate payments per the terms of the service contract in the rights management server. On the next interaction with the individual or when acted on by the proprietor using his key object, the rights management server can orchestrate actions appropriate with that violation, such as suspending functionality by engaging with software or hardware related to the object, or by refusing to do so, denying access to its digital objects or imposing fines, or flagging the object for repossession, or other actions.

The taught system is also able to work in concert with other computerized systems to facilitate transactions such as workflows between applications or blockchain-based smart contracts to enable further automation and tracking. Consider a scenario where a customer did not honor the terms of an agreement after using a digital fingerprint to take possession of the object. Here, the rights management server within the taught system executes procedures that would engage the payment processor to charge fees according to the process terms. In the depot example, assume that a piece of equipment isn't returned on time. The rights management server or its connected software has been monitoring the usage rights for violations autonomously. The taught system would work with other security systems in the warehouse to determine whether the object was returned on time and then charge any appropriate fees based on procedures or license terms or take other actions. In this example the revocation of rights is built into the system, however, it can also be done manually by the proprietor or his agent or by other methods.

The taught system may deny access to customers based upon rights or licenses with other customers or polices dictated by the laws or by the originator. Although a customer may scan an object (or otherwise obtain and/or reference the object's digital fingerprint) in hopes of taking possession of that object, the rights management server and any connected security or governing systems may deny the customer that possession based upon licenses or procedures in the rights management server. Here, the digital fingerprint is used to identify the individual physical object and initiate the transaction and the tracking of rights. Digital fingerprints may also identify the user - these may be key object digital fingerprints or even the user's or proprietor's own biometric digital fingerprint or any other known identification method.

In one embodiment, the taught system is used to control policies concerning the condition of an object. For example, a customer and a lender have an agreement for the customer to return an object in a specific condition. In one example, where the object is a piece of fine art or a musical instrument, the taught system may enable the lender to track the specific condition of the object before use and objectively determine the impact of the customer's use upon the object's return. As a result of the condition evaluation, the user may be assessed a fee or given a refund on, e.g. a security deposit, as determined by the object's condition.

In general, a digital fingerprint rights management server or platform preferably implements the following features:
- To create and maintain policies and procedures governing object authorization and usage into environments and systems with a level of confidence that those policies will be respected.
- Provide system administration tools designed to create and manage authorization or usage rights that are controlled by licenses, policies, and procedures that may be fixed or dynamic. For example, individual, unique terms of service could be negotiated with an individual end user or digital fingerprint provider.
- Provide logic for complex policy and procedure evaluators to perform the reasoning and decision-making tasks.
- Perform the tasks necessary to maintain policies and procedures with confidence that their governance will be respected by all parties, from the terms originator or object assigner to the downstream user or users. Policy management includes tasks such as authoring, distributing, and evaluating policy and procedure expressions.
- Policies and procedures may be used to create licenses that represent authorization and rights from one party to another. Multiple authorizations from the same issuer may be grouped together into a single license. Or hierarchical licenses can be created for groups of users. Authorization and object usage rights may be chained together through a digital fingerprint of the issued key object. Other known structures or combinations of structures of authorization and/or access may also be employed.
- Provides traceability for policy and procedure violations and violators.

Within view of this disclosure are uses of digital fingerprinting for more than just access and/or control of an object. For example, it may not be (or only be) the permissions that are controlled by the rights management. An assessment of the condition of the object, based on changes to the object's digital fingerprint, may determine different charge rates, for example. The point of this example is that it is not the possession of the digital fingerprint (and therefore, presumably, of the object itself) that triggers the actions of the rights server. Rather, it is the *change* in such a digital fingerprint that does so. The change in the digital fingerprint may be assessed by first matching the print to an object in the datastore, and then comparing the original (or a previous) digital fingerprint of the object to the currently presented or new digital fingerprint.

This approach solves many problems because the condition of an object in many cases can be easily and objectively measured and documented and accurately attached to the responsible customer. For comparison, consider the practice of car rentals in which the last customer bears responsibility for damages to the vehicle, such as scratches and excessive wear and tear, based solely on when the damage is discovered or documented by the rental, usually by visual inspection under a variety of conditions. In a scenario based on the teachings of this disclosure, manual inspection is avoided by comparing digital fingerprints and other data from when the vehicle was initially loaned out and when it was returned. The rights management server manages all the actions needed to assess the damage, make charges, and process payments in accordance with the rental contract. The same approach may be used for any object where wear and tear detection, and actions based on them, are important. This is another example of the taught system implementing a smart contract.

In one embodiment, consistent use of the taught system may record and document the history related to each rental, such as where it was used, how long it has been used, how much it was used, and if any damage was incurred. Based upon usage data, the taught system may also be used to suggest improvements, maintenance, or replacement related to the object or its related digital objects to the customer or lender. This feature may be implemented, for example, by a workflow that executes periodically or is triggered by specified management parameters stored in a record of the rental object.

In one embodiment, the taught system is used to offer addressable advertising for related product and/or service offers to customers acquiring an object. The taught system knows the object and may have detailed knowledge about the customer or user identity from their authentication. This means that the taught system can offer addressable advertising when a user scans the object to use the digital fingerprint to identify it or use it in an approved manner. The user may then be presented with individualized advertisements, content, or offers for that specific object and/or related offers to that specific customer in that particular setting. For instance, consider a customer, who has identified themselves, attempting to rent a lawn mower from the lender. After he authenticates the lawn mower, he can be presented with complementary offers (such as for a rake, or lawn-waste bags) and the most appropriate lawn mower rental terms based on related data.

Further illustrative processes and features of the taught system may include enforcing rules around the transport or storage of objects. This method provides the owner, his representatives, and distributors with a means for validation and control of how their objects are handled. Consider objects that are condition-controlled for temperature, like wine. Initially, the taught system uses the digital fingerprint to authenticate pallets of wine. The taught system then tracks the wine through the supply chain and may be connected to various sensors such as temperature sensing equipment. (See Fig. 2 and corresponding text.) If a damaging temperature is reached, the wine can be presumed damaged and the rights management server can inform and orchestrate actions for other software or participants to prevent it from being sold or shipped further through the supply chain. For example, when the next authentication by digital fingerprint was attempted, the individual making the authentication would be notified that the wine had been damaged from excessive temperatures and should refuse delivery or take other appropriate action.

In one embodiment, the use of an object controlled through the taught system is conditional, requiring that the object be authenticated periodically. If, at one of those authentication attempts, the user has violated terms of his agreement through overuse, improper use, unauthorized transfer, use outside regions of authorized use, or in other ways, the rights management server can turn off or modify any associated rights. In addition to controlling the object itself, a device, such as a smartphone, may issue an alert to the user that an unauthorized use is about to take place, warn the owner or his agent of unauthorized use, or some combination of the two. In another example, a digital fingerprint of a person's face (or other region) may be used to control access to a file of other digital fingerprints. In one use case, a user is authorized to test a valuable commodity asset for authenticity against a set of digital fingerprints of known-authentic (or known-non-conflict) assets of the same class. To prove it is the correct user submitting the asset's digital fingerprint, the user may be first authenticated by imaging the user and submitting the resulting digital fingerprint of the user's face, hand, or other biometric area. The user's digital fingerprint is compared or used to query a record of authorized users' digital fingerprints to authenticate the user. The usual methods may be employed to prevent copying of digital fingerprints, such as an inability to use an exact copy and such a high difficulty barrier to counterfeiting to render counterfeiting impracticable.

### Data Structures

Figure 5 is a simplified conceptual diagram of one possible arrangement of data records in a datastore consistent with the present disclosure. Those skilled in the art will recognize that many variations in data structures, databases, and datastore technologies may be applied. In the present example, one table stores key object digital fingerprint records, for example, records 504A, 504B, and 504C. Each record may include various fields, which may include one or more of a key object identifier, a digital fingerprint of the corresponding key object, additional metadata of the key object, a link to a corresponding asset database record, and a query history. The key object ID may be convenient in some applications but is not essential as the key object digital fingerprint can serve to identify it. Other metadata about the key object may be useful but is not critical. Similarly, in some applications, query history-i.e., tracking usage of the subject key object-may be useful. For example, in some embodiments, a number of uses of the key object may be limited, or its temporal useful life, or its GPS location. What is critical is that the key object digital fingerprint is linked to a corresponding unique physical object as explained above. The physical object information may be included in the same database, or a physical object may have a corresponding record in a protected asset database. To illustrate, a link 510 in the key object record points to a corresponding asset record 506B.

One simple example of an asset database structure is shown in Fig. 5, comprising records 506A, 506B, 506C and 506D. Each asset record may include fields containing, for example, an asset ID, asset description, usage data, management parameters, location data, etc. Most of these fields are not critical; and other fields may be included as necessary or useful to various applications. What is essential here is the management parameters field. (The name is not critical; it is the functionality of this field as explained above that is essential.) Of course, in some embodiments, the management parameters field may simply be a link to another table where details of the parameters are stored. Also shown for illustration, but not required, is a link to another table or database 520 to store detailed usage data generated by the rights server.

### Computer-Aided Manufacturing or Production

In one embodiment, the taught system is used to control the replication of an object. The taught system can require or prevent specified activities by providing a rights database, based on registered digital fingerprints, their metadata, and rights or policies associated with each digital fingerprint, for replication computers or machines to check for associated authorizations or rights. For example, in the event a user attempted to scan an object for replication using a 3D printer that was connected to the taught system, the system can reference the digital fingerprint of the object and prevent or allow this user from making a replication based upon the rights granted or maintained by the taught system. To run replication in this scenario, digital fingerprinting of the object is required. If said digital fingerprint then unlocks a file saying "do not duplicate this object" or is denied by the rights management server, then control has been established. More information about interfacing with manufacturing equipment can be found in applicant's U.S. Patent Application Publication No. 2018/0012008 A1 entitled *"Authenticated Production."*

This disclosure benefits object creators by controlling replication of taught system-protected physical goods. The taught system can provide a repository of protected objects and specify rights related to the protected objects' reproduction. When a user is using a manufacturing system incorporated with the taught system, the object's digital fingerprint can be used to look up what replication or reproduction rights are available. If a match to the digital fingerprint is found, the taught system enforces the policies and rights (in this case through the replication system), and thereby enabling the manufacturing system to take appropriate actions and prevent inappropriate ones. Usage rights could range from granting unlimited access, to limiting the number of replications, to denial of replication unless new terms were negotiated or administered. Replicating objects under these conditions may also transfer or confer copies or access to the object's associated digital artifacts, such as instruction manuals, digital twins, etc. as well as keeping track of the original scanned source object that provided the model for the replication.

For example, if this system were used in key copying and replication, the taught system would have the digital fingerprint of the original key and provide traceability from the newly manufactured key back to the original source key it was modeled on. In one example, a key manufacturer, such as a 3D-printed key manufacturer, creates a digital fingerprint of every key manufactured and sold. When the key is sold to a user, the user gets an exclusive right, protected by the digital fingerprint, to copy or recast the purchased key. When a possessor of the key attempts to have the key copied or recast at the vendor's location, they will not be able to do so without being the purchasing user or being authorized or assigned that right by the purchasing user. Note that in cases where it is anticipated that the digitally fingerprinted object may be lost, such as in the case of a 3D printed key, a different object (or objects) may be designated to be digitally fingerprinted as a proxy to access the taught information relating to the original key. Other access methods and loss/redundancy arrangements may also be employed.

### Leveraging Objects in Place of Biometric Identification

In another embodiment, the taught system may be used to not only manage rights associated to a digital fingerprint, but also to act as an intermediary identity for individual persons, thereby avoiding identity tracking techniques. In particular, the digital fingerprints of an object may provide a substitute for biometric identification. This may be achieved by having the object carry the burden of identification, not the person. This provides anonymity to the person, enabling access or other rights that normally would only follow biometric authentication. In this example, the person is first biometrically authenticated by a trusted third party, his rights and credentials established, and that information and permissions, but not identifying or other information unnecessary for the task at hand, is transferred or associated to the digital fingerprint of some easily transportable physical object, such as a ring, or a watch, or the backside of a drivers' license.

This embodiment is particularly addressed to situations where permissions are typically linked to an individual identity in a way that exposes that identity. Such is typical of biometric access systems using fingerprints or faces. A person shows his fingerprints (or face), is identified, and then granted the permissions associated with that identity. In this embodiment, the permissions, but not the non-essential identifying information, are transferred to the object. Using rights assigned to an object rather than person avoids the use and collection of personally identifiable information (PII) in circumstances where such information is inessential or peripheral to the task at hand. Identity may be associated with an individual's physical, physiological, mental, economic, cultural or social information, but if such information is not needed for the task at hand, it is needlessly exposed in current systems. The taught system avoids that exposure, associating only the permissions and rights necessary for a certain application with the held object. In addition to protecting the privacy of the user, the taught system greatly aids in compliance with privacy and non-profiling requirements which are becoming increasingly common.

This approach is useful because it provides an individual with a bridge or one-to-one connection to a third-party such as a bank, commercial entity, to a digital object, or to any other system, through a specific intermediary object, as an alternative to traditional individual profiling approaches that create or record biometric data for the individual. Here the digital fingerprint of the object is used as an identity document, much like a signet ring, and like such a ring, carries only specific, enumerated rights and information, in contrast to a person's identity which is linked to a great deal of personal information unrelated to the current task.

As a clarifying example, consider a scenario between an individual and security company that controls a building. The individual wants access to the building but does not want to be identified or otherwise tracked. The security company may provide access to the building by giving access permission to the digital fingerprint of an object, for example the back of a smartphone, possessed by the individual. Each time the individual seeks to gain access to the building, they simply scan the back of their smartphone (here, a key object) to provide the digital fingerprint for authentication and gains entry to the building. This approach circumvents the need for complicated, distributed storage of the user's PII and cases where systems need to remove or forget user information, by avoiding collecting PII altogether. Here the digital fingerprint holder is anonymous. In cases, where the taught system does record PII, on an individual or object, it may provide functionality that enables users to manage what information is associated with objects and their digital fingerprints. Users can interact with software to manage this information through the rights management server.

In this example the object acts in many ways like a standard key, with two major exceptions: first, rather than being distributed by the entity controlling access, the entry rights of the key (i.e. it unlocks a door) can be digitally transferred to any object of the user's choosing and what that object is, may be kept secret from all but the user. If such a transfer is made through a third party, all identifying information is separated from entry permission. Second, unlike keys, the control object cannot be duplicated (since digital fingerprints of even visually identical objects are too different to allow false authentication).

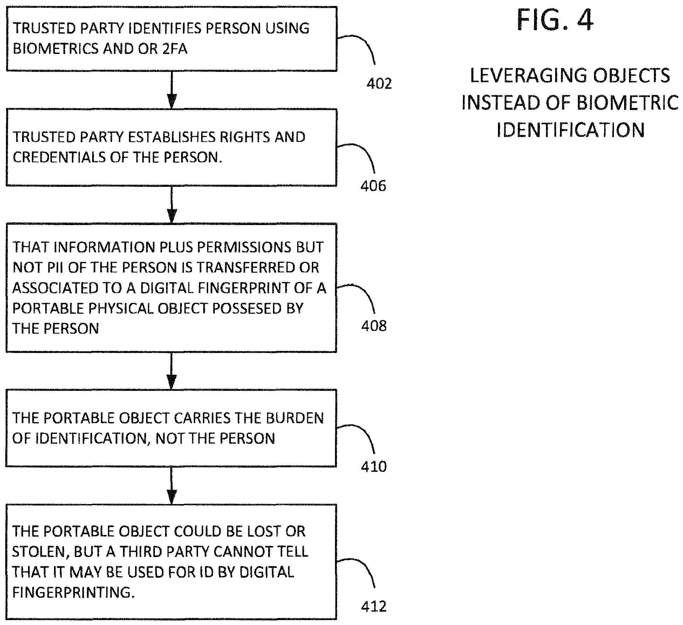

Fig. 4 is a simplified flow diagram of a process for leveraging objects instead of biometric identification to avoid collecting personally identifiable information of a person to confirm their identity. In an embodiment, a trusted party identifies a person, for example, using biometrics, 2FA (two-factor authentication, or any other MFA, multi-factor authentication), etc., block 402. The trusted party establishes rights and credentials of the identified person, block 406. That information, plus permissions, but not personally identifiable information (PII) of the person is transferred, stored or associated to a digital fingerprint of a portable physical object possessed by the identified person, block 408. The portable object thus carries the burden of identification rather than the person, block 410. As noted at block 412, the portable object may be lost or stolen, but a third party cannot tell by inspection that the object could be used for identification by digital fingerprinting.

### Additional Practical Applications and Examples

Counterfeiters and others may seek to substitute one part for another. Often such substitute parts or components are of lower quality than the original or may violate manufacturers' liability terms. If, at authorized manufacture, legitimate objects are digitally fingerprinted and if, subsequently, such digital fingerprints are used to authenticate received parts, the introduction of unauthorized, potentially inferior parts is avoided.

Under this disclosure, not only authenticating information may be stored in the file accessed by the digital fingerprint, but potentially also policies and procedures associated with that object in the rights management server. In doing so, the taught system may execute various tasks or procedures based on available functionality in that system, such as checking for tampering, logging unauthorized usage, logging contract/license violation, preventing replication or copyright violation; providing authorized component validation for safe usage. These advantages apply to engine components and a vast array of other applications.

System checks can be done periodically, be triggered by events, or be part of procedures. For example, protected equipment could run a check on itself each day or every time it loses and reestablishes a Wi-Fi connection. In one example, such updates may be communicated via link 220 (Fig. 2) to the rights server. Data on authentication requests may be provided back to third parties for monitoring.

Figure 6 is a simplified flow diagram to illustrate one example of a process to enforce management usage parameters governing a protected asset. In this process, a suitable system receives a target (tendered) digital fingerprint ostensibly of a physical key object, block 602. The system queries a database for a matching protected asset, block 606. More specifically, in one embodiment, the system may query a database to find a matching record based on the digital fingerprint, and based that matching record, identify a corresponding protected physical asset. Conditioned on finding a matching asset record, the system accesses management parameters stored in or linked to the matching record, block 608. Next, the system executes a workflow (for example, realized in a software module, file or application) to grant access to the protected asset in accordance with the management parameters, block 610.

The system may then monitor usage of the asset, for example via sensors, update messages, etc., block 612. Figure 2 illustrates one possible architecture of a suitable system. Monitoring may be continuous, periodic, or triggered in various ways. A sensor may transmit a message responsive to detecting a certain parameter limit being exceeded, such as temperature, machine cycles, etc. In the event of a violation of the management parameters, execute a predetermined alarm workflow, block 614. Such a workflow may stop or modify operation of the asset. It may send a message to a stakeholder. It may assess a penalty to the user. These are merely examples and not intended to be limiting.

The taught system can be used with high-value components and parts, for example aircraft or satellite parts where strict high-quality supply must be maintained. In these scenarios, the taught system can prevent part-swapping or replacement of authentic parts with parts that are not approved by manufacturers or unspecified by system owners. The digital fingerprint is used to authenticate the identity of authentic parts. Once a baseline for an operational system is established using digital fingerprints, the rights management system can interpret data from various sensors, equipment, and data input mechanisms, to check the state and quality of objects, components, or other parts. Any operational anomalies may be captured by sensors or system log data. The rights management server may use such data to determine appropriate procedures according to its policies. If the object being replaced does not meet policies or cannot be authenticated at all, the taught system can initiate the appropriate action. For example, sensors within a taught system could detect that a part in an aircraft engine has been illegitimately substituted. The taught system can work with other security components (such as a file delineating and controlling engine start requirements) to prevent this engine from starting until a valid digital fingerprint of that component was authenticated. The taught system allows the example component system to be operational only when it assured such operation is in line with policies in the rights management server.

The teachings of this disclosure allow the originating entity to reliably govern/control rights associated with usage of the object through using digital fingerprints to access the rights management server and provide access through any incorporated locking or access policies or mechanisms. Each time an object leaves an originating entity's possession, it is subject to risk of one or more of improper use, fraud, malfunction, and unauthorized replication or substitution of components. With this method, the originating entity (and/or any other parties to the transactions involving the object) may obtain high-confidence confirmation that the whole, or any portion, of the original object in the primary, or any subsequent transactions, will operate and be executed according to usage terms outlined between transacting parties.

Upon return of an object, its components may be inspected by comparing digital fingerprints previously recorded. When the digital fingerprints of the associated parts or components match, the originator will have high confidence that the object and its components are returned without substitution or fraud. This enables the rights management server to take appropriate action. If a substitution was detected, the rights management system can be queried for the appropriate action to take. Consider a scenario around aircraft repair and maintenance, where an unsanctioned engine component was used to replace an existing sanctioned component. Routine scanning of the engine components' digital fingerprints can reveal that the new part is unsanctioned and may trigger a procedural response from the rights management server. Among such procedural responses may be the releasing of the engine manufacturer from product liability associated with the engine. In addition, the taught system may be used to track or assign liability dependent on how the object is used or what has happened to it.

Engine wear detection and operation. In a variant of the previous embodiment, it is the detection of excess wear through a digital fingerprinting process, rather than detection of substituted parts, that triggers control procedures. For example, an engine showing excess wear on its turbine blades may be prevented from starting until appropriate maintenance has been performed and authenticated.

### Object Control (Bridging of the Digital and Physical Worlds)

In another embodiment, the taught system may be used to govern and control transactions and rights associated between digital and physical objects. The digital fingerprint is used to uniquely identify and authenticate one or more physical objects. From there, the unique physical objects can be connected to digital objects using the taught system's rights management server. Once the connection is made, transactions related to a digital object may be allowed to affect any connected physical objects. Such procedures also apply to hybrid objects already associated with a digital object (such as a control program).

Consider an example where trackable digital artifacts, such as virtual tools, exist in a computer game. These virtual tools are acquired with the purchase of similar real-world physical tools. The tool supplier and virtual game developer have an agreement and through the taught system, the ownership of the virtual tools is connected to the digital fingerprint of the physical tools. The ownership of the virtual tools transfers when the physical tools are purchased. Within the game, a virtual player may sell these virtual tools and also transfer ownership of the physical tools. The taught system leverages the connection between the virtual or digital artifact to the real-world physical object. This is made possible because the physical tools are digitally fingerprinted to establish a unique identity and the rights management server stores the relationship to the virtual tools.

### Digital Fingerprinting

"Digital fingerprinting" refers to the creation and use of digital records (digital fingerprints) derived from properties of a physical object, which digital records are typically stored in a database. Digital fingerprints maybe used to reliably and unambiguously identify or authenticate corresponding physical objects, track them through supply chains, record their provenance and changes over time, and for many other uses and applications including providing secure links between physical and digital objects as described above.

In more detail, digital fingerprints typically include information, preferably in the form of numbers or "feature vectors," that describes features that appear at particular locations, called points of interest, of a two-dimensional (2-D) or three-dimensional (3-D) object. In the case of a 2-D object, the points of interest are preferably on a surface of the corresponding object; in the 3-D case, the points of interest may be on the surface or in the interior of the object. In some applications, an object "feature template" may be used to define locations or regions of interest for a class of objects. The digital fingerprints may be derived or generated from digital data of the object which may be, for example, image data.

While the data from which digital fingerprints are derived is often images, a digital fingerprint may contain digital representations of any data derived from or associated with the object. For example, digital fingerprint data may be derived from an audio file. That audio file in turn may be associated or linked in a database to an object. Thus, in general, a digital fingerprint may be derived from a first object directly, or it may be derived from a different object (or file) linked to the first object, or a combination of the two (or more) sources. In the audio example, the audio file may be a recording of a person speaking a particular phrase. The digital fingerprint of the audio recording may be stored as part of a digital fingerprint of the person speaking. The digital fingerprint (of the person) may be used as part of a system and method to later identify or authenticate that person, based on their speaking the same phrase, in combination with other sources.

In the context of this description, a digital fingerprint is a digital representation of the physical object. It can be captured from features of the surface, the internals, the progression of the object in time, and any other repeatable way that creates a digital fingerprint that can be uniquely and securely assigned to the particular digital object. Though not mentioned herein, secure protection of the physical object, its digital fingerprint, and of the associated digital objects are assumed.

In the context of this document, a digital fingerprint is a natural "digitization" of the object, obtainable unambiguously from the digital object. It is the key to the digital object, providing the link between the physical object and the digital. These digital fingerprints, in order to accomplish the kind of physical-digital linkage desired, must have certain properties. Our approach has these properties, while many other forms of digital fingerprinting do not. Among these properties are:
- The digital fingerprint must be unambiguously derived from a single individual object.
- It must remain matchable (to a corresponding data store record) with high confidence even as the individual object ages, wears, or is otherwise changed.
- An exact match of a newly submitted digital fingerprint to the one on file is not permitted (since it might indicate hacking).
- The digital fingerprint cannot easily be modified to produce another digital fingerprint of the object.

Returning to the 2-D and 3-D object examples mentioned above, feature extraction or feature detection may be used to characterize points of interest. In an embodiment, this may be done in various ways. Two examples include Scale-Invariant Feature Transform (or SIFT) and Speeded Up Robust features (or SURF). Both are described in the literature. For example: "Feature detection and matching are used in image registration, object tracking, object retrieval etc. There are number of approaches used to detect and matching of features as SIFT (Scale Invariant Feature Transform), SURF (Speeded up Robust Feature), FAST, ORB etc. SIFT and SURF are most useful approaches to detect and matching of features because of it is invariant to scale, rotate, translation, illumination, and blur." MISTRY, Darshana et al., Comparison of Feature Detection and Matching Approaches: SIFT and SURF, GRD Journals- Global Research and Development Journal for Engineering | Volume 2 | Issue 4 | March 2017.

In some embodiments, digital fingerprint features may be matched, for example, based on finding a minimum threshold distance. Distances can be found using Euclidean distance, Manhattan distance etc. If distances of two points are less than a prescribed minimum threshold distance, those key points may be known as matching pairs. Matching a digital fingerprint may comprise assessing a number of matching pairs, their locations or distance and other characteristics. Many points may be assessed to calculate a likelihood of a match, since, generally, a perfect match will not be found. In some applications an "feature template" may be used to define locations or regions of interest for a class of objects.

In an embodiment, features may be used to represent information derived from a digital image in a machine-readable and useful way. Features may be point, line, edges, and blob of an image etc. There are areas as image registration, object tracking, and object retrieval etc. that require a system or processor to detect and match correct features. Therefore, it may be desirable to find features in ways that are invariant to rotation, scale, translation, illumination, noisy and blurry images. The search of interest points from one object image to corresponding images can be very challenging work. The search may preferably be done such that same physical interest points can be found in different views. Once located, points of interest and their respective characteristics may be aggregated to form the digital fingerprint (generally including 2-D or 3-D location parameters).

In the context of this description a digital fingerprint is a digital representation of the physical object. It can be captured from features of the surface, the internals, the progression of the object in time, and any other repeatable way that creates a digital fingerprint that can be uniquely and securely assigned to the particular digital object. Though not mentioned herein, secure protection of the physical object, its digital fingerprint, and of the associated digital objects are assumed.

Put another way, a digital fingerprint is a natural "digitization" of the object, obtainable unambiguously from the digital object. It is the key to the digital object, providing the link between the physical object and the digital. These digital fingerprints, in order to accomplish the kind of physical-digital linkage desired, must have certain properties. Among these properties are:
- The digital fingerprint must be extracted unambiguously from a single individual object.
- It must remain matchable with high confidence as the individual object ages, wears, or is otherwise changed.

### Scanning

In this application, the term "scan" is used in the broadest sense, referring to any and all means for capturing an image or set of images, which may be in digital form or transformed into digital form. Images may, for example, be two dimensional, three dimensional, or in the form of a video. Thus a "scan" may refer to an image (or digital data that defines an image) captured by a scanner, a camera, a specially adapted sensor or sensor array (such as a CCD array), a microscope, a smartphone camera, a video camera, an x-ray machine, a sonar, an ultrasound machine, a microphone (or other instruments for converting sound waves into electrical energy variations), etc. Broadly, any device that can sense and capture either electromagnetic radiation or mechanical wave that has traveled through an object or reflected off an object or any other means to capture surface or internal structure of an object is a candidate to create a "scan" of an object.

Various means to extract "fingerprints" or features from an object may be used; for example, through sound, physical structure, chemical composition, or many others. The remainder of this application will use terms like "image" but when doing so, the broader uses of this technology should be implied. In other words, alternative means to extract "fingerprints" or features from an object should be considered equivalents within the scope of this disclosure. Similarly, terms such as "scanner" and "scanning equipment" herein may be used in a broad sense to refer to any equipment capable of carrying out "scans" as defined above, or to equipment that carries out "scans" as defined above as part of their function. Attestable trusted scanners should be used to provide images for digital fingerprint creation. Scanner may be a single device or a multitude of devices and scanners working to enforce policy and procedures.

### Authentication

In this application, various forms of the words "authenticate" and "authentication" are used broadly to describe both authentication and attempts to authenticate which comprise creating a digital fingerprint of the object. Therefore, "authentication" is not limited to specifically describing successful matching of inducted objects or generally describing the outcome of attempted authentications. As one example, a counterfeit object may be described as "authenticated" even if the "authentication" fails to return a matching result. In another example, in cases where unknown objects are "authenticated" without resulting in a match and the authentication attempt is entered into a database for subsequent reference the action described as "authentication" or "attempted authentication" may also, *post facto,* also be properly described as an "induction". An authentication of an object may refer to the induction or authentication of an entire object or of a portion of an object.

More information about digital fingerprinting is set forth below and can be found in various patents and publications assigned to Alitheon, Inc. including, for example, the following: DIGITAL FINGERPRINTING, U.S. Pat. No. 8,6109,762; OBJECT IDENTIFICATION AND INVENTORY MANAGEMENT, U.S. Pat. No. 9,152,862; DIGITAL FINGERPRINTING OBJECT AUTHENTICATION AND ANTI-COUNTERFEITING SYSTEM, U.S. Pat. No. 9,443,298; PERSONAL HISTORY IN TRACK AND TRACE SYSTEM, U.S. Pat. No. 10,037,537; PRESERVING AUTHENTICATION UNDER ITEM CHANGE, U.S. Pat. App. Pub. No. 2017-0243230 A1. Each of these patents and publications is hereby incorporated by this reference.

### EXAMPLE EMBODIMENTS

Further examples of embodiments of the present invention are defined, without limitation, by the following Enumerated Example Embodiments (EEEs):
EEE 1: A transitory or non-transitory computer-readable storage medium whose stored contents configure a computing system to perform a method, the method comprising: storing a key object digital fingerprint in a key object digital fingerprint record of a database; selecting an asset for automated management; creating an asset database record associated with the selected asset; linking the key object digital fingerprint to the asset database record; adding or linking management parameters to the asset database record; receiving a target digital fingerprint from a user; authenticating the target digital fingerprint by attempting to match the target digital fingerprint to a previously stored key object digital fingerprint; conditioned on the target digital fingerprint matching a previously stored key object digital fingerprint within a threshold level of confidence, accessing the asset database record linked to the key object digital fingerprint; based on the management parameters, executing a workflow to grant access and or manage usage of the selected asset according to the management parameters; and updating the selected asset database record based on the execution of the workflow.
EEE 2: The storage medium of EEE 1 wherein the step of storing the key object digital fingerprint includes: scanning a key physical object, the key physical object formed, at least in part, from structures of a material substance; and generating, from a digital image of the scanned key physical object, a key object digital fingerprint, wherein the key object digital fingerprint is generated from features in the structures of the material substance, and wherein the key object digital fingerprint is distinguishable from each of a plurality of other digital fingerprints generated from other digital images of other physical objects even if one or more of the other physical objects visually appears identical to the key physical object.
EEE 3: The storage medium of EEE 1 or EEE 2 wherein the workflow includes: generating a contract between a proprietor of the selected asset and the user in accordance with the management parameters; communicating with the user to obtain a signature or assent to the contract; and updating the selected asset database record to reflect assent of the user to the contract.
EEE 4: The storage medium of any of EEEs 1-3 wherein the selected asset comprises a physical object and the workflow includes communicating with external security mechanisms or systems so as to permit the user to access the physical object.
EEE 5: The storage medium of EEE 4 wherein the external security mechanisms are incorporated in the physical object itself, affixed to the physical object, or contain the physical object, such as a lock box.
EEE 6: The storage medium of any of EEEs 1-5 wherein the selected asset comprises a physical object and the workflow includes: communicating with external sensors or processes to capture usage data of the selected asset; comparing the usage data to the management parameters; and executing an action based on a result of the comparison.
EEE 7: The storage medium of EEE 6 wherein the action comprises one or more of locking or disabling the physical object, modifying operational features of the physical object, and assessing charges to the user based on the captured usage data.
EEE 8: The storage medium of any of EEEs 1-7 wherein the selected asset comprises a physical object and the workflow includes: authenticating the user; and conditioning access to the selected asset on authentication of the user in addition to matching the target digital fingerprint.
EEE 9: The storage medium of any of EEEs 1-8 wherein the selected asset comprises a physical object and the workflow includes at least one of metering, tracking, authenticating, or controlling access to the selected asset based upon a predetermined schedule or payment plan.
EEE 10: A rights server system comprising: a digital processor to execute stored program code; a data store operatively coupled to the digital processor; the data store arranged to maintain records of key object digital fingerprints, at least one of the key object digital fingerprints including, linked to, or associated with a record of a protected asset; and a communications module for programmatic communications with one or more external objects, components, and processes; the program code arranged to cause the digital processor, upon execution of the program code, to: receive or generate a target digital fingerprint of a target physical object; query the data store to match the target digital fingerprint to at least one of the key object digital fingerprints to identify a protected asset linked or associated to the matched key object digital fingerprint; and conditioned on matching the target digital fingerprint to a protected asset within a threshold level of confidence, granting access to the protected asset either locally or using the communications module to communicate the access grant.
EEE 11: The rights server system of EEE 10 wherein the program code is further arranged to cause the digital processor, upon execution of the program code, to limit and or monitor the access granted to the protected asset according to stored management parameters associated with the protected asset.
EEE 12: The rights server system of EEE 10 or EEE 11 including a user interface arranged to communicate with a user to receive the target digital fingerprint in connection with a request to access a protected asset.
EEE 13: The rights server system of any of EEEs 10-12 wherein the communications module is arranged for communication with a scanner to receive image data of a target physical object, and the digital processor is arranged to generate a digital fingerprint of the target physical object based on the received image data to form the target digital fingerprint.
EEE 14: The rights server system of any of EEEs 10-13 wherein the executable program code provides system administration tools to create and manage usage rights and parameters for protected assets according to one or more licenses, policies, and procedures that may be fixed or dynamic.
EEE 15: The rights server system of any of EEEs 10-14 wherein the protected asset is a physical object and the program code further causes the digital processor to carry out the steps of - communicating with external sensors or processes to capture usage data of the protected asset; comparing the usage data to stored management parameters associated with the protected asset; and execute an action based on a result of the comparison.
EEE 16: The rights server system of EEE 15 wherein the action comprises one or more of locking or disabling the physical object, modifying operational features of the physical object, and assessing charges to the user based on the captured usage data.
EEE 17: The rights server system of EEE 15 or EEE 16 wherein the program code further causes the digital processor to carry out the steps of - acquiring a new digital fingerprint of the protected asset after granting access; comparing the new digital fingerprints to previously stored digital fingerprints of the protected asset; and based on a result of the comparing step, taking an action according to the stored management parameters associated with the protected asset.
EEE 18: The rights server system of EEE 17 wherein the action comprises analyzing the result of the comparing step relative to the management parameters and generating a message based on the analysis.
EEE 19: The rights server system of EEE 18 wherein the action comprises assessing a charge to the user based on the analysis indicating wear and tear of the protected asset in excess of permitted wear and tear according to the management parameters.
EEE 20: A transitory or non-transitory computer-readable storage medium whose stored contents configure a computing system to perform a method, the method comprising: storing a key object digital fingerprint in a key object digital fingerprint record of a database; selecting an asset for automated management; creating a database record associated with the selected asset; linking the key object digital fingerprint to the selected asset database record; adding or linking management parameters to the selected asset database record; receiving a target digital fingerprint from a user; authenticating the target digital fingerprint by attempting to match the target digital fingerprint to a previously stored key object digital fingerprint; conditioned on the target digital fingerprint matching a previously stored key object digital fingerprint, accessing a selected asset database record linked to the key object digital fingerprint; based on the management parameters, executing a workflow to manage usage of the selected asset according to the management parameters; and updating the selected asset database record based on the execution of the workflow; wherein the selected asset comprises a digital object and the workflow includes executing a process to permit the user to access the digital object consistent with the management parameters.
EEE 21: The storage medium of EEE 20 wherein the process to permit access controls permissions, the number of uses or lengths of use, and rights associated with altering, sharing, and copying of the asset or any object (physical or digital) associated with the key object digital fingerprint.
EEE 22: A machine comprising: a digital processor; a digital memory operatively coupled to the processor to enable the processor to execute machine-readable instructions stored in the memory; a datastore operatively coupled to the processor; database software stored in the memory and executable by the processor to access the datastore, said access including storing at least a first database of digital records in the datastore; wherein the first database includes a set of key object digital fingerprint records, each key object digital fingerprint record including at least a first field for storing data comprising a key object digital fingerprint and a second field for storing an identifier of or link to a physical object.
EEE 23: The machine of EEE 22 including: a second database of digital records in the datastore, wherein the second database includes a set of asset database records, each asset database record including at least a first field for storing data comprising an identifier of an asset and a second field for storing data defining or linking to management parameters for controlling access to and use of the asset by a holder of the key object digital fingerprint.
EEE 24: The machine of EEE 23 wherein the asset comprises at least one of a physical object, a digital object, and a hybrid object.

One of skill in the art will recognize that the concepts taught herein can be tailored to a particular application in many other ways. In particular, those skilled in the art will recognize that the illustrated examples are but one of many alternative implementations that will become apparent upon reading this disclosure. It will be obvious to those having skill in the art that many changes may be made to the details of the above-described embodiments without departing from the underlying principles of the disclosure. The scope of the present disclosure should, therefore, be determined only by the following claims.

## Claims

1. A rights server system comprising:
a digital processor to execute stored program code;
a data store operatively coupled to the digital processor; the data store arranged to maintain multiple records of key object digital fingerprints, at least one of the key object digital fingerprints including, linked to, or associated with a record of a protected asset; and
a communications module arranged to transmit programmatic communications with at least one external object, component, and process;
the program code arranged to cause the digital processor, upon execution of the program code, to:
receive a target digital fingerprint of a target physical object;
query the data store to match the target digital fingerprint to at least one of the key object digital fingerprints to identify a protected asset linked or associated to the matched key object digital fingerprint; and
in response to a match of the target digital fingerprint and the protected asset within a threshold level of confidence, grant an access to the protected asset either locally or using the communications module to communicate an access grant.

2. The rights server system of claim 1 wherein the program code is further arranged to cause the digital processor, upon execution of the program code, to limit or monitor the access granted to the protected asset according to one or more stored management parameters associated with the particular protected asset.

3. The rights server system of claim 1 or claim 2 further comprising a user interface arranged to communicate with a user to receive the target digital fingerprint in connection with a request to access the protected asset.

4. The rights server system of any one of claims 1-3 wherein the communications module is arranged for communication with a scanner to receive a piece of image data of the target physical object, and the digital processor is arranged to generate a digital fingerprint of the target physical object based on the received piece of image data.

5. The rights server system of any one of claims 1-4 wherein the executable program code provides one or more system administration tools to create and manage multiple usage rights and parameters for protected assets according to one or more licenses, policies, and procedures that may be fixed or dynamic.

6. The rights server system of claim 1 or claim 3 or claim 4 or claim 5 wherein the protected asset is a physical object and the program code further causes the digital processor to
communicate with one or more external sensors or processes to capture usage data of the protected asset;
compare the usage data to one or more stored management parameters associated with the protected asset; and
execute an action based on a result of the comparison.

7. The rights server system of claim 6 wherein the action causes the digital processor to at least one of lock or disable the physical object, modify one or more operational features of the physical object, and assess one or more charges to the user based on the captured usage data.

8. The rights server system of claim 2 or claim 6 or claim 7 wherein the program code further causes the digital processor to
acquire a new digital fingerprint of the protected asset after granting access;
compare the new digital fingerprint to one or more previously stored digital fingerprints of the protected asset; and
based on a result of the comparing step, take an action according to the one or more stored management parameters associated with the protected asset.

9. The rights server system of claim 8 wherein the take an action step causes the digital processor to analyze the result of the comparing step relative to the management parameters and;
at least one of generate a message based on the analysis and assess a charge to the user based on the analysis indicating a wear and tear of the protected asset in excess of a permitted wear and tear according to the one or more stored management parameters.

10. A computer-readable storage medium including multiple stored contents that configure a computing system to perform a method, the method comprising:
storing a key object digital fingerprint in a key object digital fingerprint record of a database;
selecting an asset for automated management;
creating an asset database record associated with the selected asset;
linking the key object digital fingerprint to the asset database record;
adding or linking one or more management parameters to the asset database record;
receiving a target digital fingerprint from a user;
authenticating the target digital fingerprint by attempting to match the target digital fingerprint to a previously stored key object digital fingerprint;
in response to the target digital fingerprint matching a previously stored key object digital fingerprint within a threshold level of confidence, accessing the asset database record linked to the key object digital fingerprint;
based on the one or more management parameters, executing a workflow to grant access or manage usage of the selected asset according to the one or more management parameters; and
updating the selected asset database record based on an execution of the workflow.

11. The storage medium of claim 10 wherein the step of storing the key object digital fingerprint includes:
scanning a key physical object, the key physical object formed, at least in part, from structures of a material substance; and
generating, from a digital image of the scanned key physical object, a key object digital fingerprint, wherein the key object digital fingerprint is generated from features in the structures of the material substance, and wherein the key object digital fingerprint is distinguishable from each of a plurality of other digital fingerprints generated from one or more other digital images of one or more other physical objects even if at least one of the one or more of the other physical objects visually appears identical to the key physical object.

12. The storage medium of claim 10 or claim 11 wherein the selected asset comprises a physical object and the workflow includes at least one of metering, tracking, authenticating, or controlling access to the selected asset based upon a predetermined schedule or payment plan.

13. The storage medium of claim 10 or claim 11 wherein the selected asset comprises a digital object and the workflow includes executing a process to permit the user to access the digital object consistent with the one or more management parameters.

14. A machine comprising:
a digital processor;
a digital memory operatively coupled to the processor to enable the processor to execute multiple machine-readable instructions stored in the memory;
a datastore operatively coupled to the processor;
a piece of database software stored in the memory and executable by the processor to access the datastore, said access including storing at least a first database of multiple digital records in the datastore;
wherein the first database includes a set of multiple key object digital fingerprint records, each key object digital fingerprint record including at least a first field for storing data comprising a key object digital fingerprint and a second field for storing an identifier of or link to a physical object.

15. The machine of claim 14 further comprising:
a second database of multiple digital records in the datastore, wherein the second database includes a set of multiple asset database records, each asset database record including at least a first field for storing data comprising an identifier of an asset and a second field for storing data defining or linking to one or more management parameters for controlling access to and use of the asset by a holder of the key object digital fingerprint.
